# EUROPÄISCHE PATENTSCHRIFT

(11) **EP 1 327 347 B1**
(45) Veröffentlichungstag und Bekanntmachung des Hinweises auf die Patenterteilung: **22.09.2004**
(21) Anmeldenummer: 01987993.1
(22) Anmeldetag: 17.10.2001
(51) Int. Cl.: H04M 1/02

(54) **SCHNURLOSES TELEFON**
CORDLESS TELEPHONE
TELEPHONE SANS FIL

(30) Priorität: 20.10.2000 DE 10052212
(43) Veröffentlichungstag der Anmeldung: 16.07.2003
(73) Patentinhaber: Fujitsu Siemens Computers GmbH, 80807 München (DE)
(72) Erfinder: FEHRM, Björn, 82211 Herrsching (DE)
(74) Vertreter: Epping Hermann & Fischer
(86) Internationale Anmeldenummer: PCT/DE2001/003960
(87) Internationale Veröffentlichungsnummer: WO 2002/033940

(56) Entgegenhaltungen:
- EP-A- 0 784 353
- EP-A- 0 898 223
- EP-A- 1 073 246
- WO-A-99/23800
- GB-A- 2 328 343
- US-A- 5 446 789
- US-A- 5 841 849

## Beschreibung

Die Erfindung betrifft ein schnurloses Telefon mit einem Bildschirm zur Anzeige und einem Bildschirm zur Eingabe, wobei der Bildschirm zur Anzeige auf einem ersten Teil des Telefons und der Bildschirm zur Eingabe auf einem zweiten Teil des Telefons angeordnet ist und die beiden Teile scharnierartig verbunden und zusammenklappbar sind und auf dem zweiten Teil Tasten zur Eingabe vorgesehen sind.

Ein derartiges Telefon ist aus der Druckschrift GB 2 328 343 A bekannt. Das dort beschriebene schnurloses Telefon weist ebenfalls zwei zusammenklappbaren Hälften mit Drucktasten auf der einen Hälfte und einem Anzeigebildschirm auf der anderen Hälfte auf. Zusätzlich sind auf den Rückseiten der Hälften weitere Anzeigebildschirme vorgesehen.

Ein ähnliches Telefon offenbart die US-A-5 841 849. Hier sind auf beiden Hälften Anzeigebildschirme vorgesehen. Auf einer der Hälften befindet sich ein Rollball, wobei einer der Bildschirme im Zusammenspiel mit dem Rollball zur Eingabe genutzt werden kann.

Die Möglichkeit, bei einem elektronischen Gerät die Bildschirmfläche durch Aufklappen zweier miteinander verbundener Teileinheiten zu vergrößern, ist in der EP 0 898 223 A2 beschrieben.

Die Druckschrift US-A-5 446 789 offenbart ein schnurloses Telefon mit einer ausziehbaren Antenne, das mit Funktionen, die typisch für einen Computer sind, ausgestattet sein kann.

Aus der Druckschrift EP-A-0 784 353 ist ein schnurloses Telefon bekannt, das einen Eingabebildschirm aufweist und dessen Antenne entnehmbar ist und als Eingabestift genutzt werden kann.

Ein Telefon mit Anzeigebildschirm, Eingabebildschirm und druckempfindlichen Tasten ist von der Firma Qualcomm bekannt. Bei diesem Modell ist der Bildschirm zur Eingabe und der Bildschirm zur Anzeige einstückig ausgebildet. Die Tastatur kann über einen scharnierartigen Deckel über den unteren Bildschirmbereich geklappt werden.

Derartige Telefone mit einem Bildschirmbereich zur Eingabe werden als sog. Smartphones bezeichnet, welche eine Kombination aus einem elektronischen Notizbuch bzw. Taschenkalender und einem normalen schnurlosen Telefon, wie z.B. einem GSM-Handy darstellen. Mit einem Smartphone kann somit nicht nur telefoniert werden, sondern es ist kann ebenso zusätzlich als Adreßbuch, Kalender, für SMS, Fax und Mail sowie als Zugang zum Internet verwendet werden und dient auch für sonstige Geschäftsanwendungen. Alle Anwendungen können über eine Schnittstelle mit dem PC überspielt bzw. synchronisiert werden.

Der Markterfolg von Handys bzw. Smartphones hängt sehr stark von der richtigen Größe, dem Gewicht sowie vom Preis ab. Wie man bei den bisherigen Handy-Modellen erkennen kann, ist es entscheidend, das Gewicht und die Größe so zu reduzieren, daß das Handy in eine Hemd- oder Jackentasche paßt.

Bei einem Smartphone sind die entscheidenden Elemente der Bildschirm zur Anzeige sowie der Bildschirm zur Eingabe. Bei der Reduzierung der Größe eines Geräts sind die Bildschirme der begrenzende Faktor, da bei einer weiteren Reduzierung das Angezeigte unleserliche werden würde. Des weiteren ist der tatsächliche Bildschirm wesentlich größer als derjenige, der zur Anzeige verwendet werden kann. So ist z.B. bei einem PalmPilot der Bildschirm 70 x 80 mm = 5600 mm² groß, jedoch ist die tatsächliche Displayanzeige nur 56 x 56 mm = 3136 mm² mit 160 x 160 Pixeln wesentlich kleiner. Der Rest des Bildschirms wird für Texteingabe und Eingabefelder für Doppelfunktionen verwendet. Die Anzeigefläche von 3136 mm² = 160 x 160 Pixeln kann nicht weiter reduziert werden, da diese Auflösung bereits die untere Grenze für die Lesbarkeit darstellt.

Der Erfindung liegt daher die Aufgabe zugrunde, das gattungsgemäße schnurlose Telefon so weiter zu entwickeln, daß dessen Größe reduziert wird.

Die Aufgabe wird erfindungsgemäß dadurch gelöst, daß der Bildschirm zur Anzeige auf einem ersten Teil des Telefons und der Bildschirm zur Eingabe auf einem zweiten Teil des Telefons angeordnet ist und die beiden Teile scharnierartig verbunden und zusammenklappbar sind.

Das Aufspalten des Bildschirms in einen Anzeigebereich und einen Schreibbereich ermöglicht ein sehr raumsparendes Design des Telefons. Durch die beiden zusammenklappbaren Teile ist das Telefon extrem klein in seinen äußeren Abmaßen und bietet im aufgeklappten Zustand eine große Bedienoberfläche für die beiden Bildschirme sowie die Tastatur.

Günstigerweise sind die beiden Bildschirme in zusammengeklapptem Zustand gegenüberliegend und innenseitig angeordnet. Insbesondere der Bildschirm zur Eingabe muß geschützt sein, um beim Transport eine ungewollte Eingabe zu verhindern. Durch den zusammengeklappten Zustand sind automatisch beide Bildschirme geschützt.

Vorteilhafterweise ist auf dem zweiten Teil eine Tastatur zur Eingabe vorgesehen und die Rückseite des zweiten Teiles als Standfläche ausgebildet.

Hierdurch kann somit das zweite Teil praktisch auf einen Tisch gestellt werden und der Bildschirm zur Anzeige auf dem ersten Teil im richtigen Winkel für den Benutzer eingestellt werden. Die Tastatur und der Bildschirm zur Eingabe sind dadurch für den Benutzer an der bequem zu bedienenden Oberseite des zweiten Teiles angeordnet.

Gemäß einer vorteilhaften Ausgestaltung ist an dem ersten Teil eine Hörmuschel und an dem zweiten Teil an der Außenseite eine Antenne vorgesehen. Hierdurch ist gewährleistet, daß während des Telefonierens die Antenne an der Unterseite positioniert ist und somit sich gute SAR-Werte (Microwave Head Emission Values) ergeben.

Vorzugsweise ist an dem ersten Teil ein Eingabestift eingesteckt, wobei dieser so angeordnet ist, daß im zusammengeklappten Zustand des Telefons die Antenne den Eingabestift fixiert. Hierdurch ist dieser bequem nach dem Aufklappen der beiden Teile zu entnehmen.

Weiter Vorteile der Erfindung sind in den Unteransprüchen sowie in der nachfolgenden Figurenbeschreibung offenbart.

Nachfolgend wird die Erfindung anhand eines in den Zeichnungen dargestellten Ausführungsbeispieles näher erläutert.

In den Zeichnungen zeigen:
- Figur 1: eine Frontansicht des Telefons in aufgeklapptem Zustand und
- Figur 2: eine Seitenansicht des Telefons in zusammengeklapptem Zustand.

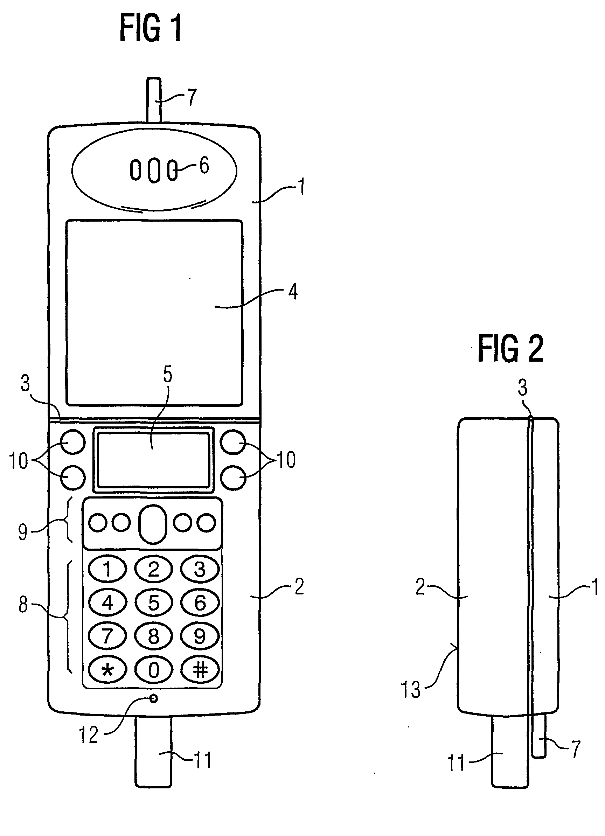

Das erfindungsgemäße Telefon besteht im wesentlichen aus einem ersten Teil 1 und einem zweiten Teil 2, welche über ein Scharnier 3 miteinander verbunden sind. Auf dem ersten Teil 1 ist ein Bildschirm 4 zur Anzeige und auf dem zweiten Teil 2 ein Bildschirm 5 zur Eingabe angeordnet. Wie in Figur 2 dargestellt sind die beiden Teile 1 und 2 deckungsgleich ausgebildet und können kompakt zusammengeklappt werden.

Automatisch schützen sich hierdurch die beiden Bildschirme zur Eingabe und zur Anzeige gegenseitig, da sie auf der Innenseite angeordnet sind.

Auf dem ersten Teil 1 ist des weiteren eine Hörmuschel 6 bzw. eine Art Lautsprecher ausgebildet.

In das erste Teil 1 ist ein Eingabestift 7 eingesteckt, über welchen die Eingabe am Bildschirm 5 zur Eingabe erfolgt.

Auf dem zweiten Teil 2 ist ein für Handys übliches Tastenfeld 8 vorgesehen, neben denen Tasten 9 zur Menüsteuerung angeordnet sind.

Neben dem Bildschirm 5 zur Eingabe sind weitere Funktionstasten 10 ausgebildet.

An der Unterseite des zweiten Teiles 2 ist eine Antenne 11 vorgesehen, welche in zusammengeklapptem Zustand gleichzeitig zur Fixierung des Eingabestiftes 7 dient. Die Anordnung der Antenne 11 an der Unterseite des Teiles 2 hat den großen Vorteil, daß diese somit weit von der Hörmuschel 6 entfernt ist und dadurch sehr niedrige Emissionswerte für den Kopf (SAR Values) erreicht werden.

Unterhalb dem Tastenfeld 8 ist zentrisch noch ein Mikrofon 12 vorgesehen.

Durch die Aufsplittung in einen Bildschirm zur Anzeige 4 und einen Bildschirm zur Eingabe 5 und durch die scharnierartige Verbindung des ersten Teiles 1 und des zweiten Teiles 2 wird ein schnurloses Telefon erzielt, welches von den äußeren Abmessungen 66 mm x 100 mm x 25 mm und ein Gewicht von 200 g aufweist. Ohne die Antenne 11 und den Eingabestift 7 ist die Länge 95 mm. Dies entspricht den Abmaßen und dem Gewicht von marktüblichen sehr kleinen Handys, obwohl der Eingabestift 7 und der Bildschirm zur Eingabe 5 sowie die Funktionstasten 10 integriert sind.

Die Außenseite des zweiten Teiles 2 ist als Standfläche 13 ausgebildet, so daß das schnurlose Telefon leicht auf einen Tisch gestellt werden kann und das erste Teil 1 mit dem Bildschirm 4 zur Anzeige wie bei einem Notebook aufgeklappt werden kann. Im zweiten Teil 2 sind die Batterien aufgenommen, wodurch das meiste Gewicht somit im zweiten Teil 2 angeordnet ist und dieses dadurch stabil auf einem Tisch oder in der Hand liegt. Die Eingabebereiche wie das Tastenfeld 8, die Tasten zur Menüsteuerung 9, der Bildschirm zur Eingabe 5 sowie die Funktionstasten 10 sind auf dem zweiten Teil somit sehr bedienerfreundlich beim Aufstellen auf einem Tisch an der Oberseite angeordnet. Der Eingabestift 7 kann bequem aus dem aufgeklappten ersten Teil 1 herausgezogen werden und ohne besondere Vorkehrungen nach dem Ende der Eingabe wieder eingesteckt werden.

Die Trennung des Bildschirms in zwei Teile und zwar in einen Bildschirm zur Anzeige und einen Bildschirm zur Eingabe bringt den weiteren Vorteil mit sich, daß während der Bildschirmeingabe der Anzeigebildschirm nicht verdeckt wird, sondern man während der Eingabe alle Funktionen am Eingabebildschirm verfolgen kann.

Durch das erfindungsgemäße schnurlose Telefon ist somit eine ideale Kombination zwischen einem PalmPilot und einem GSM-Handy mit dem Gewicht und den Ausmaßen eines derzeit handelsüblichen kleinen Handys geschaffen.

## Patentansprüche

1. Schnurloses Telefon mit einem Bildschirm zur Anzeige (4) und einem Bildschirm zur Eingabe (5), wobei der Bildschirm zur Anzeige (4) auf einem ersten Teil (1) des Telefons und der Bildschirm zur Eingabe (5) auf einem zweiten Teil (2) des Telefons angeordnet ist und die beiden Teile (1) und (2) scharnierartig verbunden und zusammenklappbar sind und auf dem zweiten Teil Tasten (8, 9, und 10) zur Eingabe vorgesehen sind,
**dadurch gekennzeichnet, daß**
im zusammengeklappten Zustand die Bildschirme (4) und (5) innenseitig angeordnet sind.

2. Schnurloses Telefon nach Anspruch 1,
**dadurch gekennzeichnet, daß**
die Rückseite des zweiten Teiles (2) als Standfläche (13) ausgebildet ist.

3. Schnurloses Telefon nach einem der Ansprüche 1 oder 2,
**dadurch gekennzeichnet, daß**
auf dem ersten Teil (1) eine Hörmuschel bzw. ein Lautsprecher (6), auf dem zweiten Teil (2) an der Außenseite eine Antenne (11) vorgesehen ist.

4. Schnurloses Telefon nach einem der Ansprüche 1 bis 3,
**dadurch gekennzeichnet, daß**
an dem ersten Teil (1) ein Eingabestift (7) angeordnet bzw. eingesteckt ist.

5. Schnurloses Telefon nach Anspruch 4,
**dadurch gekennzeichnet, daß**
die Antenne (11) so geformt ist, daß sie im zusammengeklappten Zustand des Telefons den eingesteckten Eingabestift(7) mechanisch in seiner Position im Telefon fixiert.

6. Schnurloses Telefon nach einem der Ansprüche 1 bis 5,
**dadurch gekennzeichnet, daß**
im zweiten Teil (2) Batterien angeordnet sind.

7. Schnurloses Telefon nach einem der Ansprüche 1 bis 6,
**dadurch gekennzeichnet, daß**
in dem Telefon ein elektronisches Notizbuch bzw. ein elektronischer Taschenkalender integriert ist.

8. Schnurloses Telefon nach einem der Ansprüche 1 bis 7,
**dadurch gekennzeichnet, daß**
das Telefon folgende Funktionen ausführen kann:
SMS, Fax, Mail, WEB Browser, Verbindung zum Internet, übliche Geschäftsanwendungen sowie Update aller Daten und Synchronisation aller Daten mit einem PC.

## Claims

1. Cordless telephone having a screen for the display (4) and having a screen for the input (5) in which case the screen for the display (4) is arranged on a first part (1) of the telephone, and the screen for the input (5) is arranged on a second part (2) of the telephone, and the two parts (1) and (2) are connected and can be folded up like a hinge, and keys (8, 9 and 10) are provided on the second part for the input,
**characterized in that**
in the folded-up state, the screens (4) and (5) are arranged on the inside.

2. Cordless telephone according to Claim 1,
**characterized in that**
the rear face of the second part (2) is in the form of a stand surface (13).

3. Cordless telephone according to one of Claims 1 or 2,
**characterized in that**
an earpiece or a loudspeaker (6) is provided on the first part (1), and an antenna (11) is provided on the outside of the second part (2).

4. Cordless telephone according to one of Claims 1 to 3,
**characterized in that**
an input pen (7) is arranged and/or inserted on the first part (1).

5. Cordless telephone according to Claim 4,
**characterized in that** the antenna (11) is shaped such that, when the telephone is in the folded-up state, the antenna (11) mechanically fixes the inserted input pen (7) in its position in the telephone.

6. Cordless telephone according to one of Claims 1 to 5,
**characterized in that** batteries are arranged in the second part (2).

7. Cordless telephone according to one of Claims 1 to 6,
**characterized in that**
an electronic notebook and/or an electronic pocket calendar are/is integrated in the telephone.

8. Cordless telephone according to one of Claims 1 to 7,
**characterized in that**
the telephone can carry out the following functions:
SMS, Fax, Mail, WEB Browser, connection to the Internet, conventional business applications as well as an update to all the data and synchronization of all the data by means of a PC.

## Revendications

1. Téléphone sans fil, doté d'un écran de présentation (4) et d'un écran d'entrée (5), dans lequel l'écran de présentation (4) se trouve sur une première partie (1) du téléphone et l'écran d'entrée (5) se trouve sur une deuxième partie (2) du téléphone et les deux parties (1) et (2) sont reliées par une charnière et sont repliables et des touches (8, 9, et 10) sont prévues sur la deuxième partie pour effectuer des entrées,
**caractérisé en ce que** les écrans (4) et (5) sont placés du côté intérieur à l'état replié.

2. Téléphone sans fil selon la revendication 1, **caractérisé en ce que** le dos de la deuxième partie (2) est conformé en surface de support (13).

3. Téléphone sans fil selon l'une des revendications 1 ou 2, **caractérisé en ce qu'**un écouteur ou un haut-parleur (6) est prévu sur la première partie, et **en ce qu'**une antenne (11) est prévue sur la deuxième partie (2) du côté extérieur.

4. Téléphone sans fil selon l'une des revendications 1 à 3, **caractérisé en ce qu'**un stylet d'entrée (7) est placé ou inséré sur la première partie (1).

5. Téléphone sans fil selon la revendication 4, **caractérisé en ce que** l'antenne (11) est formé de façon à bloquer le stylet d'entrée inséré (7) mécaniquement dans sa position dans le téléphone lorsque celui-ci est replié.

6. Téléphone sans fil selon l'une des revendications 1 à 5, **caractérisée en ce que** des batteries sont placées dans la deuxième partie (2).

7. Téléphone sans fil selon l'une des revendications 1 à 6, **caractérisé en ce qu'**un bloc-notes électronique ou un agenda de poche électronique est intégré dans le téléphone.

8. Téléphone sans fil selon l'une des revendications 1 à 7, **caractérisé en ce que** le téléphone peut réaliser les fonctions suivantes : SMS, fax, courrier électronique, navigateur Web, liaison à Internet, applications commerciales courantes ainsi que mise à jour de toutes données et synchronisations de toutes données avec un PC
